(19) Europäisches Patentamt
European Patent Office
Office européen des brevets

(11) Veröffentlichungsnummer: **0 023 652**
**B1**

(12) # EUROPÄISCHE PATENTSCHRIFT

(45) Veröffentlichungstag der Patentschrift: **09.05.84**

(51) Int. Cl.³: **C 09 B 26/04,** C 09 B 44/00

(21) Anmeldenummer: **80104239.1**

(22) Anmeldetag: **18.07.80**

(54) **Verfahren zur Herstellung kationischer Farbstoffe.**

(30) Priorität: **04.08.79 DE 2931772**

(43) Veröffentlichungstag der Anmeldung:
**11.02.81 Patentblatt 81/6**

(45) Bekanntmachung des Hinweises auf die Patenterteilung:
**09.05.84 Patentblatt 84/19**

(84) Benannte Vertragsstaaten:
**BE CH DE FR GB IT LI**

(56) Entgegenhaltungen:
**DE - A - 2 509 622**
**DE - A - 2 620 790**
**FR - A - 2 164 645**
**GB - A - 1 544 290**

**CHEMICAL ABSTRACTS, Band 83, Nr. 4, 28. Juli 1975, Seite 93, Zusammenfassung Nr. 29878s, Columbus, Ohio, US**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Raue, Roderich, Dr., Bertha-von-Suttner-Strasse 48, D-5090 Leverkusen 1 (DE)**
Erfinder: **Giesecke, Heinz, Dr., Am Hang 19, D-5090 Leverkusen 3 (DE)**

EP 0 023 652 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus der Deutschen Patentschrift 1 083 000 ist ein Verfahren zur Herstellung kationischer Farbstoffe der allgemeinen Formel

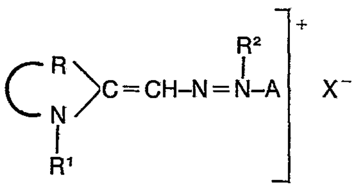 I

bekannt, worin

R den restlichen Bestandteil eines 5- oder 6gliedrigen heterocyclischen Ringes,

$R^1$ einen Alkyl-, Cycloalkyl-, Aralkyl- oder Arylrest,

$R^2$ einen Alkyl-, Cycloalkyl- oder Aralkylrest,

A einen aromatischen oder heterocyclischen Rest und

X einen Säurerest bedeutet.

Dieses Verfahren ist dadurch gekennzeichnet, dass man Farbbasen der allgemeinen Formel

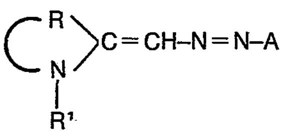 II,

worin

R, $R^1$ und A die in Formel I angegebene Bedeutung haben, mit alkylierenden Mitteln unter Quaternierung des mit dem Rest A verbundenen Azostickstoffs umsetzt.

In der Deutschen Patentschrift 1 770 782 wird die Methylierung dieser Farbbasen in Gegenwart spezieller tertiärer Amine beschrieben, wobei in allen Beispielen wasserfreie organische Lösungsmittel eingesetzt werden.

Schliesslich ist aus der Deutschen Offenlegungsschrift 2 620 790 ein Verfahren zur Alkylierung von Pyridinaldehydphenylhydrazonen in wässrigem Medium bei pH $\geq 12$ mit Dimethylsulfat oder Diethylsulfat bei niedrigen Temperaturen bekannt.

Alle Verfahren, die bisher zur Herstellung von kationischen Hydrazonfarbstoffen in Gegenwart von Wasser vorgeschlagen wurden, arbeiten mit Dimethylsulfat bzw. Diethylsulfat als Alkylierungsmittel. Beide Alkylierungsmittel haben den Nachteil der extrem leichten Verseifbarkeit im alkalischen Medium. Geringfügige Schwankungen im pH-Wert oder in der Temperatur können die Verseifung der Dialkylsulfate so beschleunigen, dass auch bei einem hohen Überschuss des Alkylierungsmittels keine vollständige Alkylierung erreichbar ist. Die mit den unmethylierten Farbsalzen verunreinigten Farbstoffe weisen gegenüber den reinen Farbstoffen erhebliche Nachteile auf; sie ergeben z.B. auf Materialien aus Polyacrylnitril stumpfere Färbungen mit geringerer Licht- und Sublimierechtheit.

Es wurde nun gefunden, dass Arylsulfonsäuremethyl- und -ethylester den Nachteil der Verseifbarkeit unter den Reaktionsbedingungen nicht im gleichen Masse besitzen wie die Dialkylsulfate. Gegenstand der Erfindung ist ein Verfahren zur Herstellung von kationischen Hydrazonfarbstoffen der allgemeinen Formel

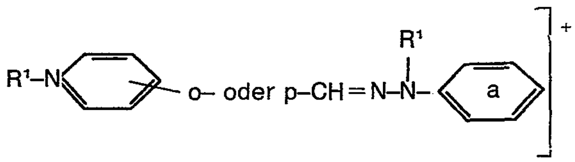 $X^-$ III

worin

$R^1$ für Methyl oder Ethyl und

$X^-$ für ein Anion stehen, und

worin der Ring

a) durch $C_1$- bis $C_4$-Alkyl-, $C_1$- bis $C_4$-Alkoxyreste oder Halogen substituiert sein kann, durch Alkylierung von Verbindungen der Formel

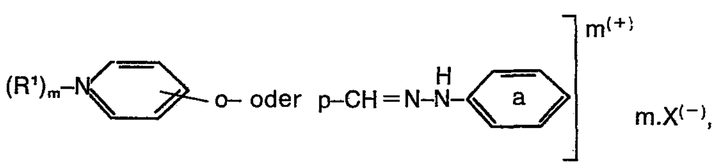 IV

$R^1$ und X die gleiche Bedeutung wie in Formel III haben,

m für 0 oder 1 steht und

der Ring a durch $C_1$- bis $C_4$-Alkyl, $C_1$- bis $C_4$-Alkoxy oder Halogen substituiert sein kann, mit Arylsulfonsäureestern der Formel

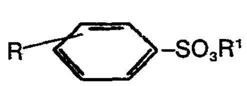 V

worin

R für Wasserstoff, $C_1$- bis $C_4$-Alkyl oder Halogen steht und

$R^1$ die obengenannte Bedeutung hat, in Gegenwart von Wasser und säurebindenden Mitteln bei Temperaturen von 20–70 °C und pH-Werten von > 12,5 und gegebenenfalls Austausch des Arylsulfonat-Anions durch ein anderes, in der Farbstoffchemie übliches Anion, beispielsweise Chlorid oder Acetat.

Geeignete Arylsulfonsäureester der Formel V sind:
Benzolsulfonsäuremethylester,
Benzolsulfonsäureethylester,
4-Methyl-benzolsulfonsäuremethylester,
4-Methyl-benzolsulfonsäureethylester,
2-Methyl-benzolsulfonsäuremethylester,
4-Chlor-benzolsulfonsäuremethylester,
3-Chlor-benzolsulfonsäuremethylester.

Als säurebindende Mittel eignen sich
Magnesiumoxid, Magnesiumcarbonat,
Natriumbicarbonat, Kaliumbicarbonat,
Lithiumhydroxid, Zinkoxid,
Natriumhydroxid, Kaliumhydroxid,
Natriumcarbonat und Kaliumcarbonat.

Bei Verwendung von Natriumhydroxid, Kaliumhydroxid, Natriumcarbonat und Kaliumcarbonat ist die Verwendung einer Dosiereinrichtung von Vorteil, deren Zulauf über ein pH-Gerät gesteuert wird.

Nach dem erfindungsgemässen Verfahren entstehen die Hydrazonfarbstoffe in sehr reiner Form. Der gesamte Reaktionsansatz kann daher zur Trockne eingedampft bzw. über einen Sprühtrockner aufgearbeitet werden. Das als Nebenprodukt entstehende Natriumsalz der Arylsulfonsäure bleibt dann als Stellmittel in dem Farbstoffpräparat. Diese Arbeitsweise hat den besonderen Vorteil, dass bei der Herstellung des Farbstoffes kein Abwasser anfällt. Die so erhaltenen Farbstoffe färben Polyacrylnitrilmaterialien in grünstichig gelben bis goldgelben Farbtönen mit hervorragenden Echtheiten an.

Beispiel 1

24,5 g Pyridin-4-aldehyd-phenylhydrazon werden bei 20 °C in 250 ml Wasser suspendiert. Man tropft 23,5 g Benzolsulfonsäuremethylester zu und hält den pH-Wert durch Zugabe von 5%iger Natronlauge zwischen 7 und 9, die Temperatur soll 25 °C nicht übersteigen. Nach 4stündigem Rühren unter den angegebenen Bedingungen fügt man weitere 23,5 g Benzolsulfonsäuremethylester zu und versetzt mit 25 g 30%iger Natronlauge. Man lässt 18 h bei einer Temperatur von 20 bis 25 °C rühren, stellt dann den pH mittels konzentrierter Salzsäure auf 4–5 und erwärmt 2 h auf 80 °C, wobei der pH – wenn notwendig – durch Zugabe von 5%iger Natronlauge zwischen 4 und 5 gehalten wird. Nach Einengen im Vakuum erhält man den Farbstoff der Formel

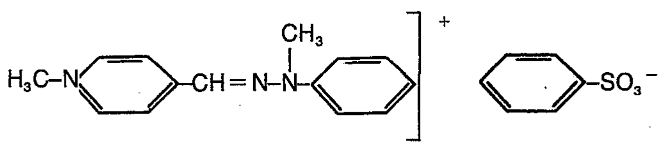

im Gemisch mit benzolsulfonsaurem Natrium als hellgelbes Pulver.

Beispiel 2

20 g Pyridin-4-aldehyd-(4-chlor-phenyl)-hydrazon werden bei 20 °C in 250 ml Wasser suspendiert. Man tropft 16,3 g Benzolsulfonsäuremethylester zu und hält den pH-Wert durch Zugabe von 5%iger Natronlauge zwischen 7 und 9. Die rötliche Suspension wird 4 h bei 20–25 °C gerührt, dann gibt man weitere 16,3 g Benzolsulfonsäuremethylester zu und versetzt die resultierende Mischung mit 17,4 g 30%iger Natronlauge. Nach 18stündigem Rühren bei 20–25 °C liegt eine orangefarbene Suspension vor, die mittels konz. Salzsäure auf einen pH-Wert zwischen 4 und 5 eingestellt wird. Bei diesem pH-Wert erhitzt man 2 h lang auf 80 °C und engt den Reaktionsansatz im Vakuum bis zur Trockne ein. Man erhält den Farbstoff der Formel

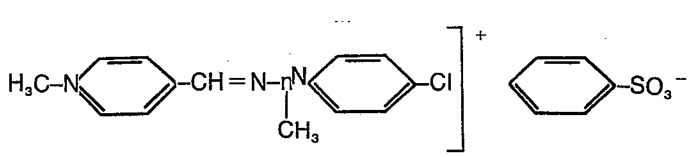

im Gemisch mit benzolsulfonsaurem Natrium.

Beispiel 3

20 g Pyridin-4-aldehyd-(4-methyl-phenyl)-hydrazon suspendiert man in 250 ml Wasser, tropft 17,9 g Benzolsulfonsäuremethylester zu und rührt 4 h lang bei 20–25 °C, wobei man den pH-Wert durch gelegentliche Zugabe von 5%iger Natronlauge zwischen 7 und 9 hält. Anschliessend gibt man weitere 17,9 g Benzolsulfonsäuremethylester zu, versetzt mit 19,1 g 30%iger Natronlauge und rührt 18 h bei einer Temperatur zwischen 20 und 25 °C. Man stellt den pH-Wert mit konz. Salzsäure auf 4–5, erhitzt unter Einsatz dieses pH-Bereiches 2 h lang auf 80 °C und engt den gesamten Ansatz unter vermindertem Druck zur Trockne ein. Man erhält so den Farbstoff der Formel

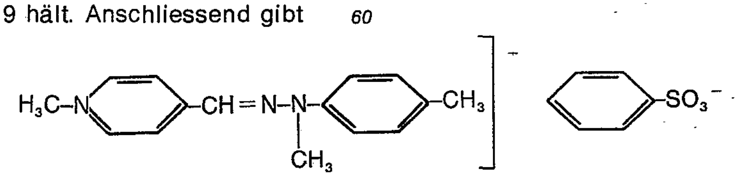

im Gemisch mit benzolsulfonsaurem Natrium.

Verwendet man anstelle des Benzolsulfonsäuremethylesters äquimolekulare Mengen von 4-Toluolsulfonsäuremethylester oder 4-Chlorbenzolsulfonsäuremethylester, so erhält man die entsprechenden Farbstoffsalze im Gemisch mit den Natriumsalzen der entsprechenden Arylsulfonsäuren.

Beispiel 4

12,3 g Pyridin-4-aldehyd-phenylhydrazon werden in 125 ml Wasser suspendiert. Bei 40 °C tropft man unter Rühren 13,9 g Benzolsulfonsäureethylester zu und hält 15 h bei dieser Temperatur, wobei man durch gelegentliches Zufügen von 5%iger Natronlauge den pH-Wert zwischen 7 und 9 hält. Man gibt zur entstandenen Emulsion weitere 24,2 g Benzolsulfonsäureethylester und stellt den pH-Wert mit 30%iger Natronlauge auf 13 ein. Nach 18stündigem Rühren bei 40 °C und einem pH-Wert von 12,5–13 ist die Umsetzung beendet. Mittels konz. Salzsäure bringt man den pH auf 4–5, erwärmt 2 h lang auf 80 °C und dampft unter vermindertem Druck zur Trockne ein. Man erhält so den Farbstoff der Formel

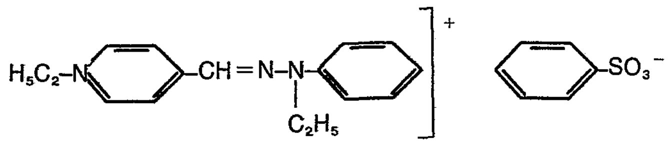

im Gemisch mit benzolsulfonsaurem Natrium.

Verwendet man anstelle des Benzolsulfonsäureethylesters äquimolekulare Mengen von 4-Toluolsulfonsäureethylester, 4-Chlor-benzolsulfonsäureethylester oder 3-Chlor-benzolsulfonsäureethylester, so erhält man die entsprechenden Farbstoffsalze im Gemisch mit den Natriumsalzen der entsprechenden Arylsulfonsäuren.

Beispiel 5

10 g Pyridin-2-aldehyd-phenylhydrazon werden in 100 ml Wasser eingetragen. Bei 40 °C tropft man unter Rühren 10,4 g Benzolsulfonsäuremethylester ein, stellt den pH-Wert mit Hilfe von 5%iger Natronlauge auf 7–9 und hält 15 h unter diesen Reaktionsbedingungen. Durch Zugabe von weiteren 18,2 g Benzolsulfonsäuremethylester, Einstellen des pH-Wertes mit 30%iger Natronlauge auf 13- und 18stündiges Rühren bei einem pH von 12,5–13 und einer Temperatur von 40 °C ist die Reaktion vollständig abgelaufen. Mit konz. Salzsäure stellt man einen pH von 4–5 ein, erwärmt 2 h auf 80 °C unter Einhaltung eines pH-Bereiches von 4–5 und dampft das Reaktionsgemisch anschliessend im Vakuum zur Trockne ein. Man erhält den Farbstoff der Formel

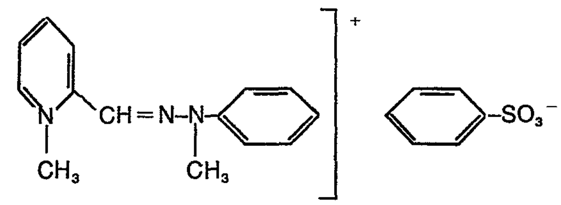

im Gemisch mit benzolsulfonsaurem Natrium.

**Patentanspruch**

Verfahren zur Herstellung von Farbstoffen der allgemeinen Formel

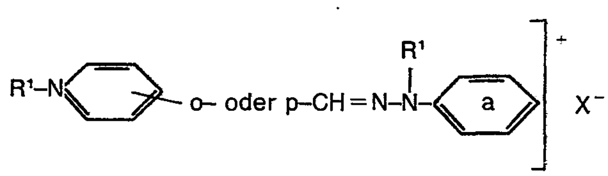

worin

$R^1$ für Methyl oder Ethyl und

$X^-$ für ein Anion stehen, und worin der Ring a durch $C_1$- bis $C_4$-Alkyl-, $C_1$- bis $C_4$-Alkoxyreste oder Halogen substituiert sein kann, dadurch gekennzeichnet, dass man Verbindungen der allgemeinen Formel

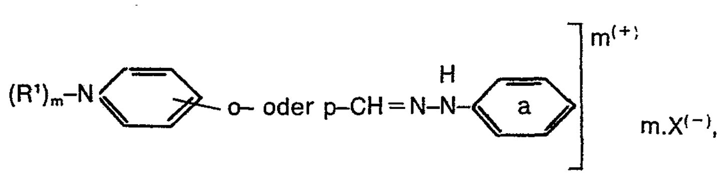

worin

$R^1$, $X^-$ und Ring a obengenannte Bedeutung haben und m für 0 oder 1 steht, mit Arylsulfonsäureestern der Formel

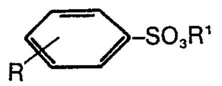

,

worin

R für Wasserstoff, $C_1$- bis $C_4$-Alkyl oder Halogen steht, und

$R^1$ die obengenannte Bedeutung hat, in Gegenwart von Wasser und säurebindenden Mitteln bei Temperaturen von 20–70 °C und pH-Werten von > 12,5 zur Umsetzung bringt und gegebenenfalls das Arylsulfonat-Anion durch ein anderes, in der Farbstoffchemie übliches Anion austauscht.

**Claim**

Process for the preparation of dyestuffs of the general formula

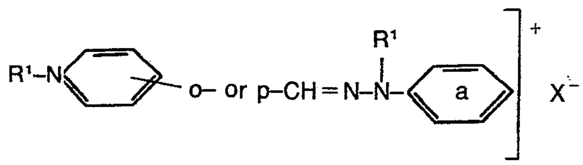

wherein

$R^1$ represents methyl or ethyl and

$X^-$ represents an anion, and

wherein the ring a can be substituted by $C_1$- to $C_4$-alkyl radicals, $C_1$- to $C_4$-alkoxy radicals or halogen, characterised in that compounds of the general formula

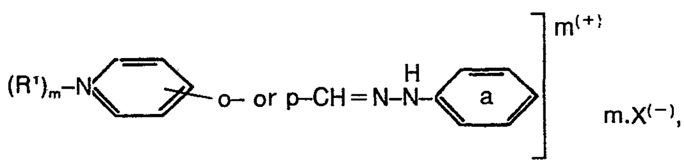

wherein

$R^1$, $X^-$ and the ring a have the abovementioned meaning and

m represents 0 or 1, are reacted with arylsulphonic acid esters of the formula

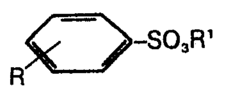

,

wherein

R represents hydrogen, $C_1$- to $C_4$-alkyl or halogen and $R^1$ has the abovementioned meaning, in the presence of water and acid-binding agents at temperatures of 20–70 °C and pH values of > 12.5 and, if appropriate, the aryl sulphonate anion is replaced by another anion customary in dyestuff chemistry.

**Revendication**

Procédé de production de colorants de formule générale

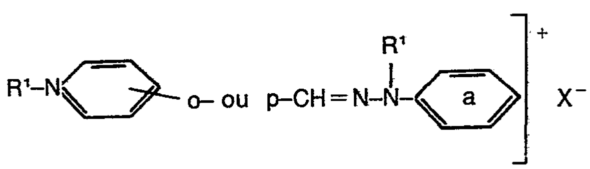

dans laquelle

$R^1$ est un groupe méthyle ou éthyle et

$X^-$ représente un anion, et le noyau

a peut être substitué par des restes alkyle en $C_1$ à $C_4$, des restes alkoxy en $C_1$ à $C_4$ ou un halogène, caractérisé en ce qu'on fait réagir des composés de formule générale

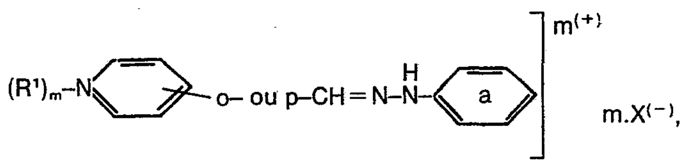

dans laquelle

$R^1$, $X^-$ et le noyau a ont la définition donnée ci-dessus et

m est égal à 0 ou à 1, avec des esters d'acides arylsulfoniques de formule

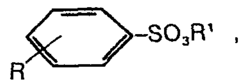

dans laquelle

R est l'hydrogène, un reste alkyle en $C_1$ à $C_4$ ou un halogène et $R^1$ a la définition donnée ci-dessus, en présence d'eau et d'accepteur d'acides à des températures de 20 à 70 °C et à des valeurs de pH supérieures à 12,5 et on échange éventuellement l'anion arylsulfonate contre un autre anion classique dans la chimie des colorants.